## Europäisches Patentamt

## European Patent Office

## Office européen des brevets

(11) Veröffentlichungsnummer: **0 046 255**
A1

---

(12) **EUROPÄISCHE PATENTANMELDUNG**

(21) Anmeldenummer: **81106220.7**

(22) Anmeldetag: **08.08.81**

(51) Int. Cl.³: **G 03 B 19/18**, G 03 B 1/48

---

(30) Priorität: **14.08.80 DE 3030875**

(43) Veröffentlichungstag der Anmeldung: **24.02.82**
**Patentblatt 82/8**

(84) Benannte Vertragsstaaten: **AT CH FR GB LI**

(71) Anmelder: **Agfa-Gevaert AG, D-5090 Leverkusen 1 (DE)**

(72) Erfinder: **Stemme, Otto, Dr., Heideckstrasse 29,
D-8000 München 90 (DE)**
Erfinder: **Lermann, Peter, Dr., Post Feldkirchen,
D-8152 Naring 106 1/2 (DE)**
Erfinder: **Stenzenberger, Volkmar, Dr.,
Fasanenstrasse 97, D-8025 Unterhaching (DE)**
Erfinder: **Theer, Anton, Bozener Strasse 5,
D-8000 München 90 (DE)**
Erfinder: **Winkler, Friedrich, Alfred-Lingg-Strasse 2,
D-8025 Unterhaching (DE)**
Erfinder: **Zanner, Johann, Albert-Schweitzer-Strasse 1a,
D-8025 Unterhaching (DE)**

---

(54) **Kamera mit einer Vorrichtung zum Aufbelichten einer Marke auf den Filmrand und damit belichteter Film.**

(57) Bei einer Kamera mit einer Filmtransportvorrichtung zum schrittweisen Vorbeitransportieren eines einseitig perforierten lichtempfindlichen Films an einem Bildfenster und mit einer Vorrichtung zum Aufbelichten einer Marke auf einen Rand des Films ist gemäß der Erfindung die Aufbelichtungsvorrichtung in einer Auflagefläche (5a) für den nicht perforierten Filmrand (RN) in Filmlaufrichtung gesehen vor dem ersten seitlichen Filmführungselement (8a) wenigstens zwei Bildlängen vor dem Bildfenster (2/4) gegenüber dem dem Bildfenster (2/4) abgewandten Ende (6) des Greiferbewegungsbereiches angeordnet.

CAMERA-WERK MÜNCHEN
PATENTABTEILUNG

14.08.80

10-hl-ew

0067C

CW 2434.0 PP/MP                    — 1 —

## Kamera mit einer Vorrichtung zum Aufbelichten einer Marke auf den Filmrand und damit belichteter Film

Die Erfindung betrifft eine Kamera mit einer Filmtransportvorrichtung zum schrittweisen Vorbeitransportieren eines einseitig perforierten lichtempfindlichen Filmes an einem Bildfenster und mit einer Vorrichtung zum Aufbelichten einer Marke auf den Rand des Filmes.

Eine derartige Kamera ist beispielsweise aus der DE-OS 27 46 036 bekannt. Die Marken dienen zum Kennzeichnen von im Stillstand wiederzugebenden Einzelbildern. Die Vorrichtung zum Aufbringen der Marken besteht u.a. aus einer Belichtungsstation, die in Filmlaufrichtung gesehen nach dem Bildfenster auf der Perforationsseite des Filmes liegt. Die Marken sind gegenüber dem zugehörigen Bild auf dem Film vorversetzt.

Wie sich gezeigt hat, müssen bei der Konstruktion einer entsprechenden Kamera unter Berücksichtigung der bei Belichtung und Wiedergabe auftretenden Probleme verschiedene einander an sich ausschließende Bedingungen erfüllt werden. So ist es vorteilhaft, die Marke vom Bildfenster möglichst weit weg zu setzen, da dann Bildprojektionsfenster und Markier- bzw. Abtastvorrichtung voneinander räumlich getrennt sind und keine Wechselwirkungen etwa durch Streulicht erfolgen können. Andererseits ist die Markierungsvorrichtung zweckmäßig höchstens so weit vom Bildfenster entfernt, daß sie mit diesem in einem Werkstück hergestellt werden kann, sonst muß nämlich bei der Montage der Geräte ein eigener Justiervorgang vorgesehen werden.

Eine weitere Schwierigkeit besteht darin, daß die Markiervorrichtung nicht verschmutzen darf. Schmutz kann in der Kamera beispielsweise durch den Greifer oder durch den von den Filmpositioniermitteln bewirkten Filmabrieb entstehen. Ferner soll die Marke selbst möglichst groß und sauber begrenzt sein, damit sie von entsprechenden Detektoren im Wiedergabegerät leicht und zuverlässig erkannt werden kann. Sie darf aber auf keinen Fall im Bild sichtbar sein oder dorthin überstrahlen.

Schließlich ist es wünschenswert, die Markiervorrichtung außerhalb des von der Umlaufblende benötigten Bereiches anzubringen, damit deren Stellung bei der Markierung nicht berücksichtigt werden muß.

Alle diese an sich widersprüchlichen Bedingungen werden gemäß der Erfindung dadurch erfüllt, daß die Aufbelichtungsvorrichtung in einer Auflagefläche für den nicht perforierten Filmrand in Filmlaufrichtung gesehen vor dem ersten seitlichen Filmführungselement um wenigstens zwei Bildlängen vor dem Bildfenster gegenüber dem dem Bildfenster abgewandten Ende des Greiferbewegungsbereiches angeordnet ist.

Die Anordnung der Markiervorrichtung in der Auflagefläche führt zu einer scharfen Randbegrenzung. Die Wahl des nicht perforierten Filmrandes führt zu besonderer Störungsfreiheit. Die Vorverlegung vor das Bildfenster verhindert, daß vom Greifer oder den Filmandruck- und -Führungsmitteln herrührender Abrieb die Markiervorrichtung verschmutzt. Gleichzeitig ist die Filmführungsplatine so ausgebildet, daß Bildfenster und Markierungsöffnung auf einem Werkstück sind und somit nicht zueinander justiert werden müssen.

Gemäß weiterer Ausbildung der Erfindung ist die Aufbelichtungsvorrichtung für die Marke eine Öffnung in der Auflagefläche für den Filmrand, hinter der eine Lichtquelle zum Erzeugen des für die Aufbelichtung erforderlichen optischen Signals angeordnet ist. Wegen der scharfen Öffnungsbegrenzung ist es nicht nötig, die Marke mit optischen Mitteln oder mit einem Lichtleitstab zu fokussieren oder zu begrenzen. Die Lichtquelle kann erheblich größer als die eigentliche Marke sein, so daß auf preiswertere Bauteile zurückgegriffen werden kann.

Ferner ist gemäß der Erfindung zweckmäßig, die Auflagefläche für den Film im Bereich der Öffnung zu verbreitern. Diese Verbreiterung schadet dem Film an dieser Stelle nicht; sie ermöglicht jedoch einen wirksamen und zuverlässigen Trennsteg zwischen Marke und Bildrand. Zweckmäßig weist die Öffnung filmseitig eine quadratische Austrittsfläche auf. Das ergibt scharfe Übergänge, die für die Erkennung elektronisch leicht ausgewertet werden können.

Gemäß der Erfindung weist der mit dieser Vorrichtung belichtete Film auf dem nicht perforierten Rand außerhalb der Bildbereiche optische Markierungen auf, die jeweils einem Perforationsloch gegenüberliegen. Das hat den Vorteil, daß die Marke von Klebestellen auf dem fertigen Film unberührt
bleibt, was nicht der Fall wäre, wenn sie in der Nähe der
Bildtrennstege liegen würde.

Weitere Einzelheiten der Erfindung ergeben sich aus der
Beschreibung, in der im folgenden anhand der Zeichnung ein
Ausführungsbeispiel erörtert wird. Es zeigen

Fig. 1     eine Aufsicht auf erfindungsgemäße Teile einer
           Schmalfilmkamera,

Fig. 2     einen Schnitt durch die Anordnung nach Fig. 1
           gemäß der Schnittlinie II-II.

Fig. 3     eine Aufsicht auf ein erfindungsgemäß markiertes
           Filmstück.

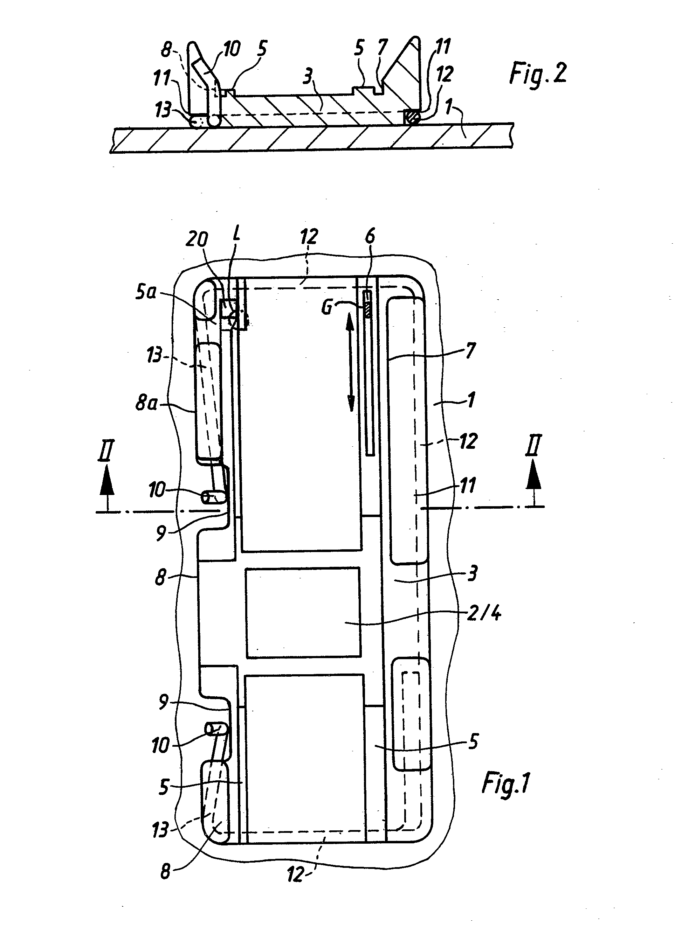

Von einer Schmalfilmkamera ist in den Figuren 1 und 2 die
stirnseitige Trägerplatine 1 gezeigt. Sie weist einen Bildfensterausschnitt 2 auf und trägt die Filmbahnplatine 3, die
ebenfalls einen Bildfensterausschnitt 4 hat. In Blickrichtung der Figuren 1 und 2 unterhalb der Trägerplatine 1 sind
der nicht gezeigte Umlaufverschluß und Greifermechanismus
sowie das Kameraobjektiv angeordnet.

Die Filmbahnplatine 3 weist in Filmtransportrichtung zu beiden Seiten des Bildfensterausschnitts 2 vier als Filmauflageflächen dienende Kufen 5 auf, die genau gegenüber dem
Objekiv gearbeitet und justiert sind und die eigentliche
Filmbahn bilden. Außerdem sind in der Filmbahnplatine 3 und
in der Trägerplatte 1 deckungsgleiche Schlitze 6  zum Durchtritt des Filmtransportgreifers G vorgesehen. Der seitlichen
Filmführung dienen seitliche Kufen 7, 8 und 8a, wobei die
Kufen 8 und 8a auf der einen Längsseite zwei Unterbrechungen 9 aufweisen. Diese Unterbrechnungen 9 dienen dem Eingriff
zweier seitlicher Filmandruckfedern 10 und sind im wesentlichen symmetrisch zur Querschnittlinie des Bildfensterausschnitts 2, 4 angeordnet. Durch die seitlichen Filmandruckfedern 10 wird erreicht, daß der nicht gezeigte Film im
Bildfenster in Anlage an den seitlichen Kufen 7 gehalten und
somit genau ausgerichtet ist, da der Abstand der Kufen 7, 8
aus Gründen eines störungsfreien Filmtransports etwas größer
als die Filmbreite sein muß.

Zur Aufnahme von Filmandruckfedern 10 ist in der Filmbahnplatine 3 unterhalb der Filmbahn 5 eine umlaufende Nut 11
vorgesehen, die an der Seite der Unterbrechungen 9 erheblich
tiefer ist als an den anderen drei Seiten der Filmbahnplatine 3.

Die Filmandruckfedern 10 werden durch einen Federdraht 12
gebildet, der so gebogen ist, daß er an der die durchgehende
Kufe 7 ragenden Längsseite und den beiden Schmalseiten der
Filmbahnplatine 3 gerade und straff in der Nut 11 liegt. An
der die Unterbrechungen 9 ragenden Seite der Filmbahnplatine
3 liegen in den Unterbrechungen 9 die freien Schenkel 13 des
Federdrahts 12. Die freien Schenkel 13 stehen an den Ecken
der Filmbahnplatine 3 bis an den äußeren Rand der Nut 11 vor
und sind dann abgeschrägt nach innen in die Unterbrechungen
9 hineingebogen und dabei vorgespannt. Die in den Unterbrechungen 9 und damit an der Filmkante anliegenden Enden 10
der Schenkel 13 sind senkrecht zur Filmbahn 5 hochgebogen
und bilden somit die eigentlichen, auf die Filmkante einwirkenden seitlichen Andruckfedern.

Soweit bisher beschrieben, ist die Filmplatine aus
DE-GM 78 19 727 bekannt.

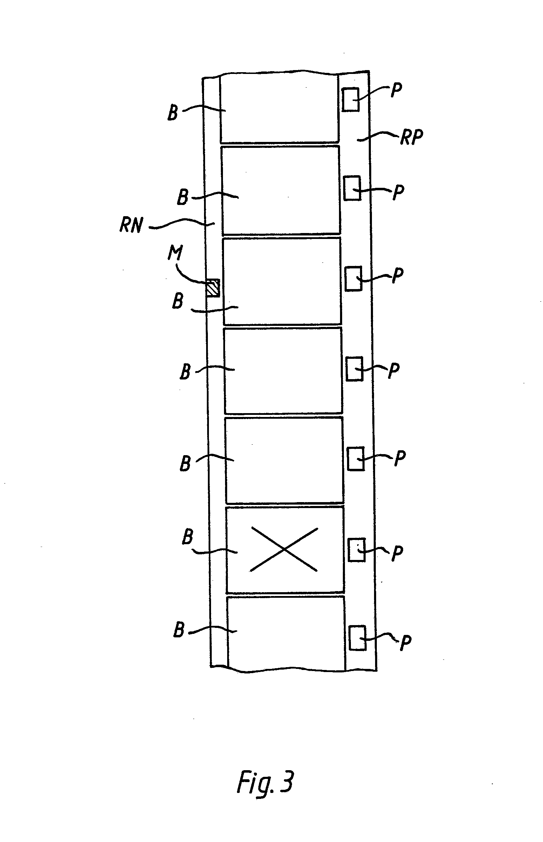

Zur Aufbringung einer Markierung gemäß der Erfindung ist die Filmauflagekufe 5 im oberen, dem Ende 6 des Bewegungsbereiches des Greifers G gegenüberliegenden Bereich 5a verbreitert und weist eine Öffnung 20 auf, die eine quadratische filmseitige Austrittsfläche hat. Hinter dieser ist eine Lichtquelle L angeordnet, die vorzugsweise aus einer Luminiszenzdiode besteht und in einem geeigneten Zeitpunkt während des Filmstillstandes Licht emittiert und somit wegen der quadratischen Austrittsfläche der Öffnung eine quadratische Marke M auf den Film aufbelichtet, die in Fig. 3 zu erkennen ist.

Die Verbreiterung der Filmauflagekufe 5 im Bereich 5a wirkt sich auf den Film nicht schädlich aus. Sie bringt aber einen bis auf die Filmauflagefläche reichende Berandung der Öffnung 20 mit sich, wodurch ein Überstrahlen der Belichtungsmarke M in den Bildbereich B hinein verhindert wird. Wegen dieser zuverlässigen Trennung von Marke und Bild kann die Marke, wie in Fig. 3 dargestellt, verhältnismäßig breit sein, was zur Erhöhung der Erkennungssicherheit bei der Wiedergabe vorteilhaft ist.

Fig. 3 zeigt einen gemäß der Erfindung mit einer Marke M versehenen, einseitig perforierten Film mit einem Perforationsrand RP mit Perforationslöchern P, mit Einzelbildern B und einer Marke M auf dem nichtperforierten Rand RN. Das in der Bildbühne befindliche Bild ist mit einem "X" markiert. Wie an dieser Figur zu erkennen ist, befindet sich die Marke M gegenüber einem Perforationsloch P auf mittlerer Bildhöhe. Eingangs wurde bereits erläutert, daß dies beim Schneiden und Kleben den Vorteil mit sich bringt, daß die Marke M nicht beeinträchtigt wird. Sofern durch den Schneide- und Klebevorgang eine Marke einem Bild in nicht zutreffender Weise zugeordnet werden sollte, kann sie mit bekannten Mitteln, beispielsweise durch übermalen mi einem Filzschreiber leicht enfernt werden.

CAMERA-WERK MÜNCHEN
PATENTABTEILUNG

14.08.80

10-hl-ew

0067C

CW 2434.0 PP/MP

Ansprüche

1. Kamera mit einer Filmtransportvorrichtung zum schrittweisen Vorbeitransportieren eines einseitig perforierten lichtempfindlichen Filmes an einem Bildfenster und mit einer Vorrichtung zum Aufbelichten einer Marke auf einen Rand des Filmes, dadurch gekennzeichnet, daß die Aufbelichtungsvorrichtung in einer Auflagefläche (5a) für den nicht perforierten Filmrand (RN) in Filmlaufrichtung gesehen vor dem ersten seitlichen Filmführungselement (8a) wenigstens zwei Bildlängen vor dem Bildfenster (2/4) gegenüber dem dem Bildfenster (2/4) abgewandten Ende (6) des Greiferbewegungsbereiches angeordnet ist.

2. Kamera nach Anspruch 1, dadurch gekennzeichnet, daß die Aufbelichtungsvorrichtung für die Marke (M) eine Öffnung (20) in der Auflagefläche (5a) für den Filmrand (RN) ist, hinter der eine Lichtquelle (L) zum Erzeugen des für die Aufbelichtung erforderlichen optischen Signals angeordnet ist.

3. Kamera nach Anspruch 2, dadurch gekennzeichnet, daß die Auflagefläche (5a) für den Film im Bereich der Öffnung (20) verbreitert ist.

4.   Kamera nach Anspruch 2, dadurch gekennzeichnet, daß die
     Öffnung (20) filmseitig eine quadratische Austrittsfläche aufweist.

5.   Einseitig perforierter Film mit aneinander anschließenden Einzelbildern, bei dem jedem Einzelbild (B) ein
     Perforationsloch (P) auf jeweils halber Bildhöhe zugeordnet ist, dadurch gekennzeichnet, daß er auf dem
     nicht perforierten Rand (RN) außerhalb der Bildbereiche
     (B) optische Markierungen (M) aufweist, die jeweils einem Perforationsloch (P) gegenüberliegen.

6.   Film nach Anspruch 5, dadurch gekennzeichnet, daß die
     Marken (M) um wenigstens zwei Bildhöhen gegenüber dem
     zugeordneten Bild (X) nachversetzt sind.

7.   Film nach Anspruch 5, dadurch gekennzeichnet, daß  die
     Marken (M) quadratisch sind.

Hierzu  2  Blatt Zeichnungen

Fig.2

Fig.1

Fig. 3

Europäisches
Patentamt

**EUROPÄISCHER RECHERCHENBERICHT**

0046255

Nummer der Anmeldung

EP 81106220.7

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| D | DE - A1 - 2 746 036 (AGFA)<br>* Fig. 1-15 *<br>-- | 1 |
| | DE - A - 2 245 199 (BOLEX)<br>* Fig. 1,2 *<br>-- | 1,2 |
| A | DE - A - 2 135 182 (POLAROID)<br>* Fig. 1,4 *<br>---- | 1,2 |

**KLASSIFIKATION DER ANMELDUNG (Int. Cl.³)**

G 03 B 19/18
G 03 B  1/48

**RECHERCHIERTE SACHGEBIETE (Int. Cl.³)**

G 03 B 21/00
G 03 B 17/00
G 03 B  1/00
G 03 D 15/00
G 03 B 19/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde
   liegende Theorien oder
   Grundsätze
E: kollidierende Anmeldung
D: in der Anmeldung angeführtes
   Dokument
L: aus andern Gründen
   angeführtes Dokument
&: Mitglied der gleichen Patentfamilie,  übereinstimmendes
   Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 20-11-1981 | KRAL |

EPA form 1503.1   06.78